(19) Europäisches Patentamt
European Patent Office
Office européen des brevets

(11) EP 2 295 939 B1

(12) EUROPÄISCHE PATENTSCHRIFT

(45) Veröffentlichungstag und Bekanntmachung des Hinweises auf die Patenterteilung:
25.10.2017 Patentblatt 2017/43

(51) Int Cl.:
G01D 5/244 (2006.01)

(21) Anmeldenummer: 10005514.4

(22) Anmeldetag: 27.05.2010

(54) **Verfahren zur Ermittelung des Feinpositionswertes eines zu überwachenden Körpers**

Method for determining the exact position of a monitored body

Procédé de détermination de la valeur précise du positionnement d'un corps devant être surveillé

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **30.05.2009 DE 102009023515**

(43) Veröffentlichungstag der Anmeldung:
**16.03.2011 Patentblatt 2011/11**

(73) Patentinhaber: **Avago Technologies General IP (Singapore) Pte. Ltd.**
**Singapore 768923 (SG)**

(72) Erfinder:
• **Mehnert, Walter**
**85521 Ottobrunn (DE)**
• **Theil, Thomas**
**85258 Weichs (DE)**

(74) Vertreter: **Dilg, Haeusler, Schindelmann Patentanwaltsgesellschaft mbH**
**Leonrodstraße 58**
**80636 München (DE)**

(56) Entgegenhaltungen:
EP-A1- 1 804 032      DE-A1- 10 149 174
DE-A1-102007 008 249      DE-B3-102004 038 622
DE-B3-102004 062 118      DE-B4- 10 392 675

• **STEVEN W SMITH ED - STEVEN W SMITH: "The Scientist & Engineer's Guide to Digital Signal Processing, Moving Average Filters", SCIENTIST AND ENGINEER'S GUIDE TO DIGITAL SIGNAL PROCESSING, CALIFORNIA TECHNICAL PUBLISHING, SAN DIEGO, CA, PAGE(S) 277 - 284 , 1. Januar 1997 (1997-01-01), XP002542766, ISBN: 978-0-9660176-3-2 Gefunden im Internet: URL:http://www.dspguide.com [gefunden am 2009-08-24]**

EP 2 295 939 B1

**Beschreibung**

Die Erfindung betrifft ein Verfahren zur Ermittlung des von der Zeit t abhängigen Feinpositionswertes x(t) eines zu überwachenden Körpers mit Hilfe von wenigstens zwei verschiedenen, sich mit der Position des Körpers ändernden und diese in reproduzierbarer Weise darstellenden Sensor-Ausgangssignalen eines Positionsgebers gemäß dem Oberbegriff von Anspruch 1. Aus DE 10 20047 038 622, DE 10 2004 062 118 und DE 103 92 675 sind Verfahren zur Bestimmung von Feinpositionswerten mit Hilfe von zwei aus den Sensor-Ausgangssignalen abgeleiteten Signalen bekannt. Ein weiterer bekannter absoluter Positionsgeber umfasst einen so genannten Segmentzähler, der einen mit dem Körper fest verbundenen Magnetträger aufweist, an dem mehrere in Bewegungsrichtung voneinander in gleichen Abständen angeordnete Permanentmagneten angebracht sind, deren alternierend aufeinander folgende Nord- und Südpole so genannte Magnetsegmente bilden, durch deren Zählung ein Grob-Positionswert des zu überwachenden Körpers bestimmt wird.

Ein Positionsgeber wird dann als "absolut" bezeichnet, wenn er in der Lage ist, ohne jegliche Stromversorgung, auch bei einer Trennung von einer eventuell vorhandenen Batterie, insbesondere den Segmentzählwert weiterhin korrekt fortzuschreiben, sodass bei Wiederherstellung der Energieversorgung der richtige Segmentzählwert auch dann sofort zur Verfügung steht, wenn sich der zu überwachende Körper in der Zwischenzeit weiterbewegt hat.

Zur Ermittlung des jeweiligen Feinpositionswertes x(t) innerhalb eines jeden der Magnetsegmente, dient eine Feinauflösungsanordnung, die wenigstens zwei, beispielsweise von Hallelementen gebildete Sensoren umfasst, die periodische Sensor-Ausgangssignale erzeugen, wobei jeweils eine Periodenlänge dieser Signale einer Magnetsegmentlänge entspricht.

Aus dem durch Zählung der Magnetsegmente ermittelten Grob-Positionswert und dem durch ihre Auflösung gewonnenen Feinpositionswert x(t) wird mit Hilfe einer Verarbeitungselektronik ein eindeutiger Positions-Gesamtwert ermittelt, dessen Genauigkeit der des Feinpositionswertes x(t) entspricht.

Im vorliegenden Zusammenhang wird statt des Ausdrucks "Magnetsegment" die Bezeichnung "Mess-Segment" verwendet, um zu verdeutlichen, dass die Sensoren nicht notwendiger Weise Elemente sein müssen, die auf Magnetfelder ansprechen. Das erfindungsgemäße Verfahren kann nämlich auch dann verwendet werden, wenn die Sensoren eine andere physikalische Größe erfassen.

Generell können bei einem Positionsgeber entweder ein einziges oder mehrere fein aufzulösende Mess-Segmente vorhanden sein. Im ersten Fall erstreckt sich das Mess-Segment über die gesamte Mess-Strecke, d.h. bei einer Linearbewegung über die gesamte Bewegungsweite des zu überwachenden Körpers, und bei einer Drehbewegung über den gesamten zu erfassenden Drehwinkelbereich, bei dem es sich um den Vollkreiswinkel von 360° oder einen beliebigen, kleineren Winkel handeln kann, wie dies z.B. der Fall ist, wenn der Schwenkbereich des Gas- oder Bremspedals eines Kraftfahrzeuges erfasst werden soll.

Alternativ hierzu wird die Mess-Strecke von mehreren, vorzugsweise gleich langen Mess-Segmenten überdeckt, von denen jedes durch eine volle Periode der Sensor-Ausgangssignale abgebildet wird.

Wegen dieser Periodizität werden die Feinpositionswerte x(t) unabhängig davon wie Winkelwerte behandelt, ob es sich bei der zu überwachenden Bewegung um eine Linearverschiebung oder eine Drehbewegung handelt.

Im letzteren Fall ist zu beachten, dass diese Winkelwerte nur dann den Winkelwerten der Volldrehung des zu überwachenden Körpers, z.B. einer Welle entsprechen, wenn nur ein einziges Mess-Segment vorgesehen ist.

In allen anderen Fällen ist der Vollwinkel der Wellendrehung in mehrere, beispielsweise $m$ Winkelsegmente unterteilt, die gleich den dort beschriebenen Magnetsegmenten sind. Eine 360° umfassende Periode eines jeden der Sensor-Ausgangssignale entspricht in diesem Fall der Winkelerstreckung eines Magnet- bzw. Mess-Segments und somit nur dem $m$-ten Teil einer Volldrehung der Welle. Die dadurch entstehende Unbestimmtheit der tatsächlichen Position wird durch die Zählung der Mess-Segmente aufgefangen. Da die Segment-Zähleinrichtung mehr als $m$ Mess-Segmente zählen kann, bildet ein solcher Positionsgeber einen Multiturn, der eine Vielzahl von Volldrehungen exakt messend verfolgen und auflösen kann.

Wenn die Sensor-Ausgangssignale innerhalb eines jeden Mess-Segments einen sinusartigen, einen dreiecksförmigen oder ähnlichen Verlauf aufweisen, ist jedes von ihnen mit einer weiteren Unbestimmtheit behaftet, zu deren Beseitigung die beiden Sensoren in einem Abstand positioniert werden, der sich in etwa parallel zur Bewegungsrichtung erstreckt und so gewählt ist, dass die periodischen Kurven, die den zeitlichen Verlauf der beiden Sensor-Ausgangssignale darstellen, beispielsweise um ein Viertel (90°) der einer Mess-Segmentlänge entsprechenden Periodenlänge (360°) gegeneinander versetzt sind.

In jedem Fall muss die Anordnung so getroffen sein, dass durch die kombinierte Auswertung der beiden Sensor-Ausgangssignale die in jedem von ihnen enthaltene Unbestimmtheit eliminiert werden, sodass sich ein eindeutiger Feinpositionswert x(t) ermitteln lässt.

Diese kombinierte Auswertung erfolgt derart, dass von den Sensor-Ausgangssignalen beispielsweise durch Verstärkung und/oder andere Signalverarbeitungsverfahren abgeleitete Signale f(x(t)) und g(x(t)), die im Folgenden kurz als "die abgeleiteten Signale" bezeichnet werden, einer Rechenschaltung zugeführt werden, die aus einer Wertetabelle, welche in einem von einem Festwertspeicher gebildeten Vergleichswertspeicher abgelegt ist, die Werte von Referenzkurven F(y) und G(y) erhält. Bildet man in der Rechenschaltung den Ausdruck

$$(1) \qquad \Delta(t) \;=\; f(x(t))\, G(y) \;-\; g(x(t))\, (F(y)$$

so gilt unter der Voraussetzung, dass es sich bei den Funktionen f(x(t)), g(x(t)) und F(y), G(y) um exakte Sinus- und Kosinus-Funktionen handelt, dann, wenn $\Delta(t) = 0$ wird, dass der gemessene Feinpositionswert x(t) gleich dem der Wertetabelle des Festwertspeichers zugeführten Argument y(t) ist.

Ein exakter sinus- bzw. kosinusförmiger Verlauf kann für die Referenzkurven F(y) und G(y) ohne weiteres mit ausreichender Genauigkeit gewährleistet werden, da sie durch rechnerisch ermittelte und festgelegte Werte definiert werden. In der Praxis erfüllen im Allgemeinen jedoch weder die Sensor-Ausgangssignale noch die aus ihnen abgeleiteten Signale f(x(t)) und g(x(t)) diese Bedingung mit der erforderlichen Genauigkeit, zumindest nicht bei vertretbarem Aufwand. Die Sensor-Ausgangssignale und die aus ihnen abgeleiteten Signale f(x(t)) und g(x(t)) sind zwar periodisch und für die einzelnen Mess-Segmente reproduzierbar, weisen aber vom exakten sinusförmigen Verlauf Abweichungen auf, die überdies von Mess-Segment zu Mess-Segment verschieden sein können. Wendet man die obige Formel an, so ist dann, wenn $\Delta(t) = 0$ wird, y(t) nicht gleich dem tatsächlichen Feinpositionswert, sondern weist von diesem eine Abweichung auf, die mit der Position des zu überwachenden Körpers variiert.

Zur Behebung diese Problems wird im Stand der Technik vorgeschlagen, vor dem ersten Einsatz eines solchen Positionsgebers eine Eichung durchzuführen, mit deren Hilfe die Abweichungen der abgeleiteten Signale f(x(t)) und g(x(t)) vom Idealverlauf erfasst werden, um Korrekturwerte zu ermitteln, die dann bei den eigentlichen Messungen bzw. Positionsbestimmungen Verwendung finden. Genaueres wird hierüber aber nicht gesagt.

Das gesonderte Ablegen dieser Korrekturwerte in einem eigenen Vergleichswertspeicher führt jedoch zu einem stark erhöhten Speicherplatzbedarf und verkompliziert die mathematische Auswertung der abgeleiteten Signale f(x(t)) und g(x(t)).

Statt "ideale" Referenzkurven zu verwenden, die beispielsweise einen im Rahmen der gewünschten Genauigkeit exakt sinus- bzw. kosinusförmigen Verlauf aufweisen, können vom idealen Verlauf abweichende, "verzerrte" Referenzkurven Φ(y), Γ(y) zur Verwendung kommen, die für jeden einzelnen Positionsgeber individuell dadurch erzeugt werden, dass zunächst in einem dem eigentlichen Einsatz vorausgehenden Eichverfahren Fehlerkurven öf(x), ög(x) ermittelt werden, die über den gesamten Messbereich die reproduzierbar auftretenden Abweichungen der abgeleiteten Signale f(x(t)) und g(x(t)) vom Idealverlauf darstellen. Dann werden aus diesen Fehlerkurven gewonnene Fehlerwerte auf die idealen Referenzkurven F(y), G(y) so aufgeprägt, dass die sich ergebenden und in einem Vergleichswertspeicher abgelegten verzerrten Referenzkurven Φ(y), Γ(y) unmittelbar für einen rechnerischen Vergleich mit den abgeleiteten Signalen f(x(t)) und g(x(t)) verwendet werden können.

Dies kann in der Form geschehen, dass bei Verwendung der obigen Gleichung (1) das dem Vergleichswertspeicher zugeführte Argument y(t) mit der erforderlichen Genauigkeit dann gleich dem gesuchten Feinpositionswert x(t) ist, wenn $\Delta(t) = 0$ wird.

Dem Vergleichswertspeicher wird über einen Steuereingang ein von einer Rückkopplungsschaltung erzeugter, in Abhängigkeit vom Ausgangswert $\Delta(t)$ der Rechenschaltung veränderlicher Eingangswert y(t) zugeführt.

Der Eingangswert y(t) des Vergleichswertspeichers kann dann gleich dem gesuchten Feinpositionswert x(t) gesetzt werden, wenn der Ausgangswert $\Delta(t)$ der Rechenschaltung gleich Null ist.

Eine Möglichkeit besteht darin, dass der Eingangswert y(t) des Vergleichwertspeichers ein digitaler Wert ist, der von der Rückkopplungsschaltung in Abhängigkeit vom Vorzeichen des Ausgangswertes $\Delta(t)$ der Rechenschaltung solange verändert wird, bis der Ausgangswert $\Delta(t)$ der Rechenschaltung gleich Null ist.

Dies kann auf zwei verschiedene Arten erfolgen:

Wird als Rechenschaltung ein fest verdrahtetes Rechenwerk verwendet, dessen Rechenzeit im Vergleich zu dem für die Digitalisierung der verstärkten analogen Sensorsignale erforderlichen Zeitaufwand sehr klein ist, kann die Rückkopplungsschaltung dann, wenn der Ausgangswert $\Delta(t)$ der Rechenschaltung von Null verschieden ist, den Eingangswert y(t) für den Vergleichwertspeicher je nach Vorzeichen von $\Delta(t)$ um ein Inkrement erhöhen oder vermindern, worauf die Rechenschaltung sofort eine Neuberechnung von $\Delta(t)$ vornimmt. Diese Schleife wird iterativ so lange durchlaufen, bis die Bedingung $\Delta(t) = 0$ erreicht worden ist und der zugehörige Wert y(t) gleich dem gesuchten Feinpositionswert x(t) gesetzt werden kann.

Wird als Rechenschaltung ein μ-Prozessor verwendet, so benötigt dieser für jede Berechnung von $\Delta(t)$ eine Rechenzeit, die in der gleichen Größenordnung , liegt wie sie für die Digitalisierung der verstärkten analogen Sensorsignale benötigt wird. In einem solchen Fall ist es günstig, wenn die Rückkopplungsschaltung dann, wenn der Ausgangswert $\Delta(t)$ der Rechenschaltung von Null verschieden ist, den Eingangswert y(t) für den Vergleichwertspeicher je nach Vorzeichen von $\Delta(t)$ um mehrere Inkremente erhöht oder erniedrigt, deren Anzahl von der Größe von $\Delta(t)$ abhängt,

zu dieser proportional ist, worauf die Rechenschaltung eine Neuberechnung von Δ(t) vornimmt. Auch hier wird diese Schleife so lange durchlaufen, bis die Bedingung Δ(t) = 0 erreicht worden ist und somit y(t) = x(t) gilt.

Weiterhin ist es möglich, das zur Veränderung des Eingangswertes y(t) des Vergleichswertspeichers dienende Inkrementalsignal und das Vorzeichen des Ausgangswertes Δ(t) der Rechenschaltung einem Verwender zusätzlich zum Feinpositionswert x(t) zur Verfügung zu stellen, der hierdurch unmittelbar Informationen über die Geschwindigkeit und die Richtung der zu überwachenden Bewegung erhält.

Jedes der Sensor-Ausgangssignale kann mit Hilfe von zwei Sensorelementen gewonnen werden unterstreicht das, die so angeordnet sind, dass die durch sie erfassbare, sich mit der Position des zu überwachenden Körpers ändernde physikalische Größe in ihnen gleich große Signale mit entgegengesetzten Vorzeichen hervorruft, und dass die beiden Sensorelemente zur Erzeugung eines einzigen Sensor-Ausgangssignal mit doppelter Amplitude miteinander antiseriell verbunden sind.

Hierdurch werden von außen kommende Störungen, die sich auf die von den Sensorelementen erfassbare physikalische Größe additiv aufprägen, aus den Sensor-Ausgangssignalen eliminiert.

Die abgeleiteten Signale f(x(t)), g(x(t)) können durch Verstärkung und nachfolgende Digitalisierung der Sensor-Ausgangssignale gewonnen werden.

Dabei kann die Verstärkung einkanalig erfolgen d.h. die wenigstens zwei anlogen Sensor-Ausgangssignale werden mit Hilfe eines Multiplexers alternierend an den Eingang ein und denselben Verstärkers gelegt.

Dies ist möglich, weil aus den Sensor-Ausgangssignalen die additiven Störgrößen bereits eliminiert sind, so dass ihre zeitlichen Änderungen trotz der nicht gleichzeitigen Weiterleitung der zu verarbeitenden Sensor-Ausgangssignale keine Rolle spielen.

Die einkanalige Eingangsverstärkung bringt den Vorteil, dass die Eingangsoffset-Spannung und der Verstärkungsfaktor des Verstärkers, die temperaturabhängig sind, in alle der Rechenschaltung zugeführte Signale in gleicher Weise eingehen und somit aus dem Messergebnis auf einfache Weise eliminiert werden können.

Zur Durchführung der oben bereits erwähnten Digitalisierung der verstärkten Sensorsignale können die Ausgangssignale des Verstärkers einem Digital/Analog-Wandler zugeführt werden.

Es sei darauf hingewiesen, dass die Bedingung, dass das Δ(t) gemäß Gleichung (1) gleich Null werden soll, eine ratiometrische Verarbeitung von Differenzgrößen beinhaltet, durch welche auch multiplikative Störungen der abgeleiteten Signale eliminiert werden.

Geht man nämlich davon aus, dass jedes der beiden abgeleiteten Signale f(x(t)) bzw. g(x(t)) mit der multiplikativen Störgröße η behaftet ist, dann gilt nach Gleichung (1)

$$(2) \qquad \Delta(t) \ = \ \eta\, f(x(t))\, G(y) \ - \ \eta\, g(x(t))\, F(y) \ = \ 0$$

oder

$$\eta\, f(x(t))\, G(y) \ = \ \eta\, g(x(t))\, F(y)$$

$$\eta\, f(x(t))/\eta\, g(x(t)) \ = \ F(y)/G(y)$$

sodass sich η herauskürzt.

Wenigstens eines der beiden nacheinander gewonnenen, digitalisierten abgeleiteten Signale f(x(t)) bzw. g(x(t)) wird zumindest so lange zwischengespeichert, bis auch das andere g(x(t)) bzw. f(x(t)) zur Verfügung steht, sodass dann diese beiden abgeleiteten Signale gleichzeitig der Rechenschaltung zugeführt werden können, die aus ihnen und aus Werten der verzerrten Referenzkurven Φ(y), Γ(y), die sie von einem Vergleichswertspeicher erhält, einen Ausgangswert Δ(t) berechnet.

Die Bedingung, dass die abgeleiteten Signale f(x(t)) und g(x(t) den jeweiligen Feinpositionswert x innerhalb eines Mess-Segmentes in reproduzierbarer darstellen sollen, muss nicht notwendigerweise bedeuten, dass der Wert der abgeleiteten Signale f(x(t)) und g(x(t) seine zu einer Position x gehörende Größe exakt beibehält, wenn der zu überwachende Körper in dieser Position bewegungslos steht, bzw. diese Größe immer wieder exakt erreicht, wenn diese Position x mehrmals nacheinander angefahren wird,. "Exakt" kann ohnehin immer nur bedeuten, dass die Schwankungen der Größe des betreffenden Wertes bei Stillstand des Körpers bzw. die Differenzen zwischen den Größen der nacheinander erhaltenen Werte kleiner als die jeweils geforderte Messgenauigkeit sind. Mit anderen Worten: Das Rauschen der Werte der abgeleiteten Signale f(x(t)) und g(x(t) sollte im Idealfall kleiner als die gewünschte Messgenauigkeit sein.

Diese Bedingung ist jedoch bei hohen Anforderungen an die Messgenauigkeit allenfalls mit sehr hochwertigen und dem entsprechend teueren Sensoren, Verstärkern und Analog/Digitalwandlern zu realisieren.

Demgegenüber liegt der Erfindung die Aufgabe zugrunde, ein Verfahren der eingangs genannten Art zu schaffen, durch welche sich eine große Messgenauigkeit und ein hohes Auflösungsvermögen mit möglichst kostengünstigen Bauteilen erzielen lassen.

Zur Lösung des Rausch-Problems sieht die Erfindung daher vor, jedem der beiden Messsignaleingänge der Rechenschaltung keine Einzelwerte der abgeleiteten Signale f(x(t)) und g(x(t) sondern aus mehreren, nacheinander anfallenden Einzelwerten gebildete Mittelwerte zuzuführen, deren Bildung fortlaufend in der Weise erfolgt, dass der zuletzt aus einer vorgegebenen Anzahl von vorausgehend erfassten Einzelwerten gebildete, "alte" Mittelwert $M_{alt}$ mit einem ersten Gewichtungsfaktor $gf_1$ und der jüngste Einzelwert EW mit einem zweiten Gewichtungsfaktor $gf_2$ versehen und aus diesen beiden gewichteten Werten ein neuer Mittelwert $M_{neu}$ gebildet wird.

Um diesem Verfahren eine hohe Dynamik, das heißt eine gute Anpassungsfähigkeit an rasche Geschwindigkeitsänderungen der zu überwachenden Bewegung zu verleihen, ist es besonders bevorzugt, die Größe der beiden Gewichtungsfaktoren $gf_1$ und $gf_2$ in Abhängigkeit von der Differenz zwischen dem alten Mittelwert $M_{alt}$ und dem neuen Einzelwert EW insbesondere in der Weise zu variieren, dass der erste Gewichtungsfaktor $gf_1$ um so kleiner und der zweite Gewichtungsfaktor $gf_2$ um so größer gewählt wird, je größer diese Differenz ist und umgekehrt. Dabei wird vorzugsweise die Summe der Gewichtungsfaktoren konstant $gf_1$ und $gf_2$ gehalten.

Die durch das erfindungsgemäße Verfahren erheblich verbesserte Reproduzierbarkeit der bei dem Eichvorgang für jeden der Sensoren aufzunehmenden Fehlerkurven ist nur dann gegeben, wenn weder die von den Sensoren zu erfassende physikalische Größe noch weitere Eigenschaften der Anordnung, wie z.B. ihre Geometrie sich bei einer Änderung von Umgebungsbedingungen nicht verändern.

Diese Bedingung ist im Regelfall nicht erfüllt, sodass die Fehlerkurven im Allgemeinen nicht nur von der Position des zu überwachenden Körpers sondern auch von wenigsten einem physikalischen Umgebungsparameter p(t) abhängig sind, bei dem es sich beispielsweise um die Temperatur handeln kann. In diesem Fall wird beim Eichvorgang unter systematischer Veränderung des wenigstens einen Umgebungsparameters p(t) eine Vielzahl von Fehlerkurven δf(x; p), ög(x; p), aufgenommen und hieraus eine entsprechende Vielzahl von ebenfalls von dem wenigstens einen Umgebungsparameter p(t) abhängiger Referenzkurven F(y; p), G(y; p) gebildet, deren Werte in dem Vergleichswertspeicher abgelegt werden. Während der eigentlichen Messungen kann dann dieser wenigstens eine physikalische Umgebungsparameter p(t) gemessen und aus der Vielzahl der abgespeicherten Referenzkurven die jeweils richtige zum Vergleich mit den abgeleiteten Signalen herangezogen werden.

Um den Speicherplatzbedarf möglichst klein zu halten, kann vorgesehen sein unterstreicht das, die Fehlerkurven δf(x), ög(x) bzw. öf(x; p), ög(x;p) in Form separater Stützwerte zu speichern, zwischen denen zur Ermittlung von Zwischenwerten eine lineare Interpolation durchgeführt wird. Dabei kann die Dichte der Stützwerte an die jeweils erforderliche Genauigkeit so angepasst werden, dass der durch die lineare Interpolation entstehende Fehler unterhalb der zulässigen Fehlergrenze liegt.

Diese und weitere vorteilhafte Ausgestaltungen des erfindungsgemäßen Verfahrens sowie einer zu seiner Durchführung geeigneten Vorrichtung sind in den abhängigen Ansprüchen niedergelegt.

Die Erfindung wird im Folgenden anhand eines Ausführungsbeispiels unter Bezugnahme auf die Zeichnung beschrieben.

In dieser zeigt die einzige Figur ein schematisches Blockschaltbild der Verarbeitungselektronik eines nach dem erfindungsgemäßen Verfahren arbeitenden Positionsgebers.

Für die Zwecke der folgenden Beschreibung wird auf eine Anordnung zur Überwachung der Drehbewegung einer Welle Bezug genommen, die mit einem sich mit ihr drehenden Magnetträger verbunden ist, an dem eine Reihe von Permanentmagneten mit alternierend Ausrichtung der Magnetpole so montiert ist, dass sie in Drehrichtung gleiche Abstände besitzen und so Magnet- bzw. Mess-Segment bilden, deren Längen- bzw. Winkelerstreckungen durch die Anordnung fein aufgelöst werden sollen. Dies Welle und ihr Magnetträger sind in der Figur nicht dargestellt.

Die zur Ermittlung der Feinposition der Welle erforderlichen Signale, werden von Positionssensoren 1 geliefert, bei denen es sich beispielsweise um vier Hallsonden handeln kann, die paarweise zusammengefasst sind, wobei jedes Paar antiseriell so geschaltete ist, dass seine Hallsonden von den Magnetfeldern der Permanentmagneten in entgegengesetzter Richtung durchsetzt werden, sodass sich wegen der Gegeneinanderschaltung die aus diesen Magnetfeldern resultierenden Signale addieren, von außen überlagerte Störungen sich aber gegenseitig aufheben.

Wegen der gleichen Abstände der Permanentmagnete in Bewegungsrichtung wird beim Vorbeilaufen der Magnetträgers von jedem der feststehend angeordneten Hallsondenpaare ein periodisches Signal abgegeben, das im Idealfall sinusförmig wäre. Die beiden Hallsondenpaare sind in Bewegungsrichtung mit einem Abstand angeordnet, der einem Viertel (90°) der Periodenlänge (360°) ihrer Signale entspricht, sodass man im Idealfall das eine der beiden Signale als Sinus- und das andere als das zugehörige Kosinus-Signal betrachten könnte.

Die beiden von den Hallsondenpaaren abgegebenen Signale müssen verstärkt werden, um weiter verarbeitet werden zu können. Vorzugsweise erfolgt diese Verstärkung einkanalig, um die Temperaturabhängigkeit der Offset-Spannung und des Verstärkungsfaktors des verwendeten Verstärkers 3 zu eliminieren. Zu diesem Zweck werden die beiden Sensor-Ausgangssignale einem Multiplexer 2 zugeführt, der sie alternierend an den Eingang des Verstärkers 3 legt.

Um die nachfolgende Auswertung mit Hilfe einer digital arbeitenden Rechenschaltung 10 durchführen zu können, ist der Ausgang des Verstärkers 3 ist mit dem Eingang eines Analog/Digital-Wandlers 4 verbunden, der die ihm alternierend zugeführten, verstärkten analogen Sensor-Ausgangssignale digitalisiert. Sein Ausgang ist mit einem Demultiplexers 5 verbunden, der synchron mit dem Multiplexer 2 arbeitet und so die Zweikanaligkeit wieder herstellt.

Da die Rechenschaltung 10 die verstärkten und digitalisierten Sensor-Ausgangssignale für die weitere Verarbeitung gleichzeitig benötigt, ist jedem der beiden Ausgänge des Demultiplexers 5 ein Zwischenspeicher (ZS) 6 bzw. 7 nachgeschaltet, der das zugehörige Signal so lange speichert, bis das jeweils andere ebenfalls für den gleichen Fein-Positionswert x zur Verfügung steht. Prinzipiell würde es genügen, in nur einem der beiden Ausgangskanäle des Demultiplexers 5 einen solchen Zwischenspeicher vorzusehen, doch ist wird aus Gründen der Gleichbehandlung der beiden Signale der Einsatz von zwei derartigen Zwischenspeichern 6 und 7 bevorzugt. Damit kann parallel zur Auswertung bereits eine neue Analog/Digital-Wandlung gestartet werden.

Da bei Verwendung von kostengünstigen Sensoren jedes der verstärkten und digitalisierten Sensor-Ausgangssignale stärker verrauscht sein kann, als dies für die gewünschte Messgenauigkeit akzeptabel ist, werden den beiden Eingängen 11, 12 der Rechenschaltung 10 die abgeleiteten Signale $f(x(t))$ und $g(x(t))$ vorzugsweise nicht als Einzel-Messwerte sondern in Form von zuvor in den Mittelwertbildungsschaltungen (MW) 8, 9 gebildeten Mittelwerten zugeführt.

Um eine hohe Dynamik und, zumindest dann, wenn sich der zu überwachende Körper nicht extrem schnell bewegt, eine hohe Genauigkeit zu erzielen, ist dabei erfindungsgemäß vorgesehen, jeden neuen Mittelwert $M_{neu}$ aus dem vorausgehend gewonnenen Mittelwert $M_{alt}$ und dem neuesten Einzel-Messwert EW dadurch zu bilden, dass jeder von ihnen vor ihrer Summation mit einem Gewichtungsfaktor $gf_1$ bzw. $gf_2$ multipliziert und die so erhaltene Summe durch die Summe der Gewichtungsfaktoren dividiert wird:

$$(3) \qquad M_{neu} = \frac{gf_1 M_{alt} + gf_2 EW}{gf_1 + gf_2}$$

Vorzugsweise werden dynamische Gewichtungsfaktoren $gf_1$ und. $gf_2$ in der Weise verwendet, dass der zum alten Mittelwert $M_{alt}$ gehörende Gewichtungsfaktor $gf_1$ um so kleiner und der zum neuesten Einzel-Messwert EW gehörende Gewichtungsfaktor. $gf_2$ umso größer gewählt wird, je größer die Differenz zwischen dem alten Mittelwert $M_{alt}$ und dem neuesten Einzel-Messwert EW ist, wobei die Summe der Gewichtungsfaktoren $gf_1 + gf_2$ vorzugsweise konstant gehalten wird.

Die Zwischenspeicher 6 und 7 sowie die ihnen nachgeschalteten Mittelwertbildungsschaltungen 8, 9 können mit der Rechenschaltung 10 zu einer einzigen Recheneinheit zusammengefasst werden. Sie sind hier als gesonderte Schaltungen wiedergegeben, um zu verdeutlichen, dass es sich bei den beiden den Eingängen 11 und 12 der Rechenschaltung 10 zugeführten Signalen um die im vorliegenden Zusammenhang als "abgeleitete Signale $f(x(t))$ und $g(x(t))$" handelt. Werden die Mittelwertbildungsschaltungen 8, 9 weggelassen, weil keine Mittelwertbildung durchgeführt werden soll, so sind die von den Ausgängen der Zwischenspeicher 6, 7 abgegebenen Signale die "abgeleitete Signale $f(x(t))$ und $g(x(t))$" im Sinne der vorliegenden Beschreibung.

Um den interessierenden Feinpositionswert zu ermitteln vergleicht die Rechenschaltung die abgeleiteten Signale $f(x(t))$ und $g(x(t))$ mit den Werten von Referenzkurven $\Gamma(y(t))$ und $\Phi(y(t))$, die in einem Festwertspeicher 14 abgelegt sind, anhand der Rechenoperation

$$(4) \qquad \Delta(t) \ = \ f(x(t)) \ \Gamma(y(t)) \ - \ g(x(t)) \ \Phi(y(t))$$

Wenn die abgeleiteten Signale $f(x(t))$ und $g(x(t))$ einen ideal sinus- bzw. kosinusförmigen Verlauf hätten, d.h. wenn $f(x(t)) = \sin x(t)$ und $g(x(t)) = \cos x(t)$ wäre, könnten als Referenzkurven die idealen Kurven $F(y(t)) = \sin(y(t))$ und $G(y(t)) = \cos y(t)$ verwendet werden:

$$(5) \qquad \Delta(t) \ = \ f(x(t)) \ G(y(t)) \ - \ g(x(t)) \ F(y(t)) \ =$$
$$= \ \sin x(t)) \cos y(t)) \ - \ \cos x(t)) \sin y(t)) \ =$$
$$= \ \sin[x(t) \ - \ y(t)]$$

woraus sich ergibt, dass das gesuchte x(t) dann gleich dem bekannten y(t) ist, wenn Δ(t) = 0 wird.

Zur Überprüfung dieser Bedingung dient eine Rückkopplungsschleife, d.h. das Ausgangssignal Δ(t) der Rechenschaltung 10 wird einer Rückkopplungsschaltung 15 zugeführt, die das Argument y(t) bildet, das dem Festwertspeicher 14 als Eingangssignal zugeführt wird. Die Rückkopplungsschaltung 15 überprüft, ob Δ(t) größer, kleiner oder gleich 0 ist und verändert unter Berücksichtigung des Vorzeichens von Δ(t) den Wert von y(t) um einzelne oder um mehrere Inkremente so lange, bis die Bedingung Δ(t) = 0 erfüllt ist, wie dies oben bereits geschildert wurde.

Auch die zur Durchführung des erfindungsgemäßen Verfahrens dienende Vorrichtung besitzt den eben beschriebenen Aufbau und arbeitet im Prinzip nach der gleichen Berechnungsmethode. Der entscheidende Unterschied besteht darin, dass deswegen, weil die abgeleiteten Signale f(x(t)) und g(x(t)) Abweichungen vom sinus- bzw. kosinusförmigen Idealverlauf aufweisen, gemäß Gleichung (3) an Stelle der Idealkurven F(x(t)) und G(x(t)) im Festwertspeicher niedergelegte verzerrte Referenzkurven Γ(y(t)) und Φ(y(t)) verwendet werden.

Um diese zu erhalten wurden zuvor in einem der Erstverwendung vorausgehenden Eichvorgang für jedes der Mess-Segnente die Abweichungen der tatsächlichen abgeleiteten Signale f(x(t)) und g(x(t)) vom sinus- bzw. kosinusförmigen Idealverlauf aufgenommen und auf die idealen Referenzkurven F(x(t)) und G(x(t)) mit Hilfe dieser Abweichungen so verändert bzw. verzerrt, dass der oben angegebene Algorithmus in identischer Weise verwendet werden kann. Dabei ist zu beachten, dass dann, wenn mehrere Mess-Segmente vorhanden sind, die verzerrten Referenzkurven Γ(y(t)) und Φ(y(t)) anders als beim Idealverlauf, der sich von Mess-Segment zu Mess-Segment in identischer Weise wiederholt, für jedes einzelne Mess-Segment speziell angepasste Wertebereiche aufweisen müssen, da die Abweichungen der abgeleiteten Sensorsignale f(x(t)) und g(x(t)) vom ihrem Idealverlauf in jedem Mess-Segment unterschiedlich sein können. Da mit Hilfe des Segmentzählers die einzelnen Segmente identifiziert werden können, ist immer eine eindeutige Zuordnung gegeben.

Sobald die Bedingung Δ(t) = 0 durch eine geeignete, von der Rückkoppelschaltung vorgenommene Veränderung von y(t) erreicht worden ist, wird der digitale y-Wert, der nunmehr dem gesuchten Feinpositionswert entspricht, an eine zum Verwender der Positionswerte führenden Schnittstelle 16 abgegeben.

Diese Schnittstelle 16 erhält von der Rückkoppelungsschaltung 15 über die Leitungen 17 und 18 das zur Veränderung des Eingangswertes y(t) des Vergleichwertspeichers 14 dienende Inkrementalsignal und das Vorzeichen des Ausgangswertes (Δ(t)) der Rechenschaltung 10 woraus unmittelbar Informationen über die Richtung und die Geschwindigkeit der Bewegung des zu überwachenden Körpers erhalten werden können.

Die Abweichungen der tatsächlichen, abgeleiteten Signale f(x(t)) und g(x(t)) vom sinus- bzw. kosinusförmigen Idealverlauf in jedem Mess-Segment können noch von weiteren physikalischen Umgebungsparametern, insbesondere der am Messort herrschenden Temperatur p abhängen. Um die hierdurch entstehenden Fehler zu eliminieren, ist ein Temperatursensor 19 vorgesehen, der diese Temperatur misst und ein entsprechendes Signal an eine Auswahlschaltung 20 abgibt. Im Vergleichswertspeicher sind dann zwei Scharen von verzerrten Referenzkurven Γ(y(t),p) und Φ(y(t),p) abgelegt, die beim Eichvorgang unter systematischer Variation des Umgebungsparameters p aufgenommen wurden. Unter Steuerung der Auswahlschaltung 20 werden dann aus diesen Scharen die beiden dem momentan gemessenen Wert des Umgebungsparameters entsprechenden verzerrten Referenzkurven für den rechnerischen Vergleich mit den aktuellen abgeleiteten Signalen f(x(t)) und g(x(t)) verwendet.

Bei der obigen Betrachtung war davon ausgegangen worden, dass die abgeleiteten Signale f(x(t)) und g(x(t)) und damit auch die Referenzkurven einen prinzipiell sinusförmigen Verlauf zeigen. Dies ist aber für das beschriebene Verfahren nicht von entscheidender Bedeutung. Es kann auch bei im Prinzip dreiecksförmigen oder anderen Kurvenverläufen verwendet werden. Wesentlich ist lediglich die Reproduzierbarkeit der abgeleiteten Signale f(x(t)) und g(x(t)) im oben definierten Sinn.

Weiterhin ist in der Figur eine Amplitudenauswertungsschaltung 21 vorgesehen, welcher als Eingangssignale die an den Ausgängen des Demultiplexers 5 erscheinenden einzelnen abgeleiteten Signale f(x(t)) und g(x(t)) zugeführt werden. Stattdessen könnten die Eingangssignale der Amplitudenauswertungsschaltung 21 auch hinter den Zwischenspeichern 6, 7 oder den Mittelwertbildungsschaltungen 8, 9 abgegriffen werden.

Da bei dem vorliegenden Ausführungsbeispiel angenommen wird, dass die abgeleiteten Signale f(x(t)) und g(x(t)) in etwa sinusförmig sind, d.h. ungefähr den Formeln

$$f(x(t)) = A \sin x(t)$$

und

$$g(x(t)) = A \cos x(t)$$

genügen, wobei A die Amplitude dieser periodischen Signale ist, kann in erster Näherung nach der Gleichung

$$A^2 (\sin^2 x(t) + \cos^2 x(t)) = A^2$$

die Amplitude A unabhängig vom momentanen Feinpositionswert x(t) dadurch ermittelt werden, dass Amplitudenauswertungsschaltung 21 jedes der ihr zugeführten Eingangssignale quadriert und aus der Summe dieser Quadrate die Wurzel zieht.

Der so gewonnene Amplitudenwert wird einen spannungsgesteuerten Oszillator 22 zugeführt, der zwei Charge-Pumps 23, 24 ansteuert, welche den unteren bzw. den oberen Spannungspegel der Strom/Spannungsversorgung der Positionssensoren 1 so regeln, dass eine optimale Anpassung des Sensorsignal-Spannungsbereichs an den Eingangsspannungsbereich der nachfolgenden Schaltungsanordnung erzielt wird, bei der es sich vorzugsweise um einen IC-Baustein handelt, der alle Schaltungseinheiten 2 bis 10, 14 bis 16 und 20 bis 22 umfasst.

Charge-Pumps sind dem Fachmann bekannt. Es handelt sich bei ihnen um eine Art Gleichspannungs/Gleichspannungswandler, bei denen Kondensatoren als Energiespeicher verwendet werden, um aus einer Eingangsspannung entweder eine höhere oder eine niedrigere Ausgangsspannung zu erzeugen. Sie arbeiten mit sehr geringen Energieverlusten in der Größenordnung von 5% und können aus einfachen und kostengünstigen Bauteilen aufgebaut werden.

Charge-Pumps verwenden elektronische Schalter, welche die Ladungszufuhr zu und die Ladungsentnahme aus Kondensatoren kontrollieren und die bei der vorliegenden Anordnung durch den spannungsgesteuerten Oszillator in der erforderlichen Weise betätigt werden.

**Patentansprüche**

1. Verfahren zur Ermittelung des Feinpositionswertes x(t) eines zu überwachenden Körpers mit Hilfe von wenigstens zwei verschiedenen, sich mit der Position des Körpers ändernden und diese in reproduzierbarer Weise darstellenden Sensor-Ausgangssignalen eines Positionsgebers, bei dem von den Sensor-Ausgangssignalen abgeleitete Signale f(x(t)), g(x(t)) in einer Rechenschaltung (10) mit Werten von wenigstens zwei Referenzkurven verglichen werden, deren Werte in einem Vergleichswertspeicher (14) abgelegt sind,
   **dadurch gekennzeichnet,**
   **dass** für jedes der abgeleiteten Signale f(x(t)), g(x(t)) eine Mittelwertbildungsschaltung (8, 9) Verwendung findet, die für eine fortlaufende Mittelwertbildung so ausgebildet ist, dass sie jeweils einen alten Mittelwert $M_{alt}$, der aus einer vorgegebenen Anzahl von vorausgehend ermittelten Signal-Einzelwerten gebildet ist, mit einem ersten Gewichtungsfaktor $gf_1$ und den neuesten Signal-Einzelwert EW mit einem zweiten Gewichtungsfaktor $gf_2$ multipliziert und dadurch einen neuen Mittelwert $M_{neu}$ bildet, dass sie die Summe dieser Produkte durch die Summe der Gewichtungsfaktoren $gf_1$ und $gf_2$ dividiert, und
   **dass** die so für jedes abgeleitete Signal f(x(t)), g(x(t)) gebildeten neuen Mittelwerte der Rechenschaltung (10) für einen Vergleich mit den Referenzkurven zugeführt werden.

2. Verfahren nach Anspruch 1, **dadurch gekennzeichnet, dass** die Größe der beiden Gewichtungsfaktoren $gf_1$, $gf_2$ in Abhängigkeit von der Differenz zwischen dem alten Mittelwert $M_{alt}$ und dem neuen Signal-Einzelwert EW verändert wird.

3. Verfahren nach Anspruch 2, **dadurch gekennzeichnet, dass** der erste Gewichtungsfaktor $gf_1$ um so kleiner und der zweite Gewichtungsfaktor $gf_2$ um so größer gewählt wird, je größer die Differenz zwischen dem alten Mittelwert $M_{alt}$ und dem neuen Signal-Einzelwert EW ist und umgekehrt.

4. Verfahren nach Anspruch 3, **dadurch gekennzeichnet, dass** die Summe der Gewichtungsfaktoren $gf_1$, $gf_2$ konstant gehalten wird.

5. Verfahren nach einem der vorhergehenden Ansprüche, **dadurch gekennzeichnet, dass** bei einem dem eigentlichen Messbetrieb vorausgehenden Eichlauf für jeden der Sensoren mehrere Fehlerkurven $\delta f(x; p)$, $\delta g(x; p)$ aufgenommen werden, die neben der Position x(t) von wenigstens einem weiteren physikalischen Umgebungsparameter p(t) abhängen, dass durch Aufprägung der sich hieraus ergebenden Fehlerwerte auf die jeweiligen idealen Referenzkurven F(y), G(y) eine entsprechende Vielzahl von ebenfalls von dem wenigstens einen Umgebungsparameter p(t) abhängigen, verzerrten Referenzkurven $\Phi(y; p)$, $\Gamma(y; p)$ gebildet wird, deren Werte in dem Vergleichswertspeicher (14) abgelegt werden, und dass während der eigentlichen Positionsmessungen der wenigstens eine physikalische Umgebungsparameter p(t) gemessen wird und anhand seines jeweils aktuellen Wertes durch eine Auswahlschaltung (20) die entsprechenden verzerrten Referenzkurven $\Phi(y; p)$, $\Gamma(y; p)$ ausgewählt werden, deren Werte zum Vergleich mit den abgeleiteten Signalen herangezogen werden.

6. Verfahren nach einem der vorhergehenden Ansprüche, **dadurch gekennzeichnet, dass** die Fehlerkurven öf(x), $\delta g(x)$, $\delta f(x; p)$, ög(x; p), in Form separater Stützwerte gespeichert werden, zwischen denen zur Ermittlung von Zwischenwerten eine lineare Interpolation stattfindet.

7. Verfahren nach einem der vorhergehenden Ansprüche, **dadurch gekennzeichnet, dass** die Position x(t) die Winkelstellung eines rotierenden Körpers betrifft.

8. Verfahren nach einem der vorhergehenden Ansprüche, **dadurch gekennzeichnet, dass** in Abhängigkeit von den Amplituden der Sensorsignale die Spannungsniveaus der Spannungsversorgung der Sensoranordnung so gesteuert werden, dass eine optimale Anpassung des Signalspannungsbereichs an den Eingangsspannungsbereich der die Sensorsignale verarbeitenden Schaltungseinheiten gewährleistet ist.

**Claims**

1. Method for determining a fine position value x(t) of a body to be monitored by means of at least two different sensor output signals of a position generator, which vary with the position of the body and are represented in reproducible manner, wherein from the sensor output signals derived signals f(x(t)), g(x(t)) in a calculating circuit (10) are compared with values of at least two reference curves, which values are archived in a reference value storage (14),
   **characterized in that**
   for each derived signal f(x(t)), g(x(t)) an average value determination circuit (8, 9) is used which is configured for a continuous average value determination such that each of an old average value $M_{alt}$, formed of a given amount of preliminary determined signal single values, is multiplied with a first weighting factor $gf_1$ and the newest signal single value EW with a second weighting factor $gf_2$ and thus forming a new average value $M_{neu}$, such that it divides the sum of this products by the sum of the weighting factors $gf_1$ and $gf_2$, and
   that the new average values of the calculating circuit (10) formed for each derived signal f(x(t), g(x(t)) are supplied to a comparison with the reference curves.

2. Method according to claim 1, **characterized in that** the size of both of the weighting factors $gf_1$, $gf_2$ is varied in dependency of the difference between the old average value $M_{alt}$ and the new signal single value EW.

3. Method according to claim 2, **characterized in that** the first weighting factor $gf_1$ is chosen the smaller and the second weighting factor $gf_2$ is chosen the larger, the larger the difference between the old average value $M_{alt}$ and the new signal single value and vice versa.

4. Method according to claim 3, **characterized in that** the sum of the weighting factors $gf_1$, $gf_2$ is held constant.

5. Method according to one of the preceding claims, **characterized in that** at a calibrating run prior to the real measuring operation for each of the sensors a plurality of failure curves $\delta f(x;p)$, $\delta g(x;p)$ are recorded which depend besides of the position x(t) on at least one further physical environment parameter p(t), that by impressing the herefrom resulting failure values on the respective ideal reference curves F(y), G(y) a respective plurality of distorted reference curves $\Phi(y; p)$, $\Gamma(y; p)$ are formed, which also depend on the at least one environment parameter p(t), and whose values are archived in a reference value storage (14),
   and
   that during the real position measurement the at least one physical environment parameter p(t) is measured and the distorted reference curves $\Phi(y; p)$, $\Gamma(y; p)$ are selected on the basis of its respective current value by an selection circuit (20), whose values are used for comparison with the derived signals.

6. Method according to one of the preceding claims, **characterized in that** the failure curves $\delta f(x)$, $\delta g(x)$, $\delta f(x; p)$, $\delta g(x; p)$ are stored in form of separate basic values, between which an linear interpolation takes places for determining interim values.

7. Method according to one of the preceding claims, **characterized in that** the position x(t) relates to the angularity of a rotating body.

8. Method according to one of the preceding claims, **characterized in that** in dependency of the amplitudes of the sensor signals the voltage levels of the voltage supply of the sensor arrangement is controlled such that an optimum adaption of the signal voltage range at the input voltage range of the circuit units processing the sensor signals is ensured.

**Revendications**

1. Procédé servant à déterminer la valeur précise de positionnement x(t) d'un corps à surveiller à l'aide d'au moins deux signaux de sortie de capteur différents, variant avec le positionnement du corps et représentant ce dernier de manière reproductible, d'un transmetteur de positionnement, dans lequel des signaux f(x(t)), g(x(t)) dérivés des signaux de sortie de capteur sont comparés dans un circuit de calcul (10) à des valeurs d'au moins deux courbes de référence, dont les valeurs sont enregistrées dans une mémoire de valeurs de comparaison (14),
   **caractérisé en ce**

   **que** pour chacun des signaux f(x(t)), g(x(t)) dérivés, un circuit d'obtention de valeur moyenne (8, 9) est utilisé, lequel est réalisé en vue de l'obtention continue d'une valeur moyenne de telle sorte qu'il multiplie respectivement une ancienne valeur moyenne $M_{ancienne}$, qui est obtenue à partir d'un nombre prédéfini de valeurs individuelles de signaux déterminées au préalable, à un premier facteur de pondération $gf_1$ et la dernière valeur individuelle de signal EW à un second facteur de pondération $gf_2$ et obtient ce faisant une nouvelle valeur moyenne $M_{nouvelle}$, qu'il divise la somme desdits produits par la somme des facteurs de pondération $gf_1$ et $gf_2$, et
   **que** les nouvelles valeurs moyennes obtenues pour chaque signal f(x(t)), g(x(t)) dérivé sont amenées au circuit de calcul (10) en vue d'une comparaison avec les courbes de référence.

2. Procédé selon la revendication 1, **caractérisé en ce que** la grandeur des deux facteurs de pondération $gf_1$, $gf_2$ est modifiée en fonction de la différence entre l'ancienne valeur moyenne $M_{ancienne}$ et la nouvelle valeur individuelle de signal EW.

3. Procédé selon la revendication 2, **caractérisé en ce que** le premier facteur de pondération $gf_1$ est choisi d'autant plus petit et le second facteur de pondération $gf_2$ est choisi d'autant plus grand que la différence entre l'ancienne valeur $M_{ancienne}$ et la nouvelle valeur individuelle de signal EW est plus grande, et inversement.

4. Procédé selon la revendication 3, **caractérisé en ce que** la somme des facteurs de pondération $gf_1$, $gf_2$ est maintenue de manière constante.

5. Procédé selon l'une quelconque des revendications précédentes, **caractérisé en ce que** lors d'un étalonnage précédent le mode de mesure à proprement parler pour chacun des capteurs, plusieurs courbes d'erreur δf(x ; p), δg(x ; p) sont relevées, qui dépendent, outre du positionnement x(t), d'au moins un autre paramètre environnant p(t) physique, qu'une pluralité correspondante de courbes de référence φ(y ; p), Γ(y ; p) déformées dépendant également de l'au moins un paramètre environnant p(t) est obtenue par application des valeurs d'erreur en résultant sur les courbes de référence F(y), G(y) respectives idéales, les valeurs desdites courbes de référence déformées étant enregistrées dans la mémoire de valeurs de comparaison (14), et qu'au cours des mesures de positionnement à proprement parler, l'au moins un paramètre environnant p(t) est mesuré et les courbes de référence φ(y ; p), Γ(y ; p) déformées correspondantes sont sélectionnées par un circuit de sélection (20) à l'aide de sa valeur respectivement instantanée du paramètre environnant, les valeurs desdites courbes de référence déformées étant prises en compte aux fins de la comparaison avec les signaux dérivés.

6. Procédé selon l'une quelconque des revendications précédentes, **caractérisé en ce que** les courbes d'erreur δf(x), δg(x), δf(x ; p), δg(x ; p) sont mémorisées sous la forme de valeurs d'appui séparées, entre lesquelles une interpolation linéaire a lieu aux fins de la détermination de valeurs intermédiaires.

7. Procédé selon l'une quelconque des revendications précédentes, **caractérisé en ce que** le positionnement x(t) concerne la position angulaire d'un corps en rotation.

8. Procédé selon l'une quelconque des revendications précédentes, **caractérisé en ce que** les niveaux de tension de l'alimentation en tension de l'ensemble formant capteur sont commandés en fonction des amplitudes des signaux de capteur de telle sorte qu'une adaptation optimale de la plage de tensions de signal est garantie au niveau de la plage de tension d'entrée des unités de circuit traitant les signaux de capteur.

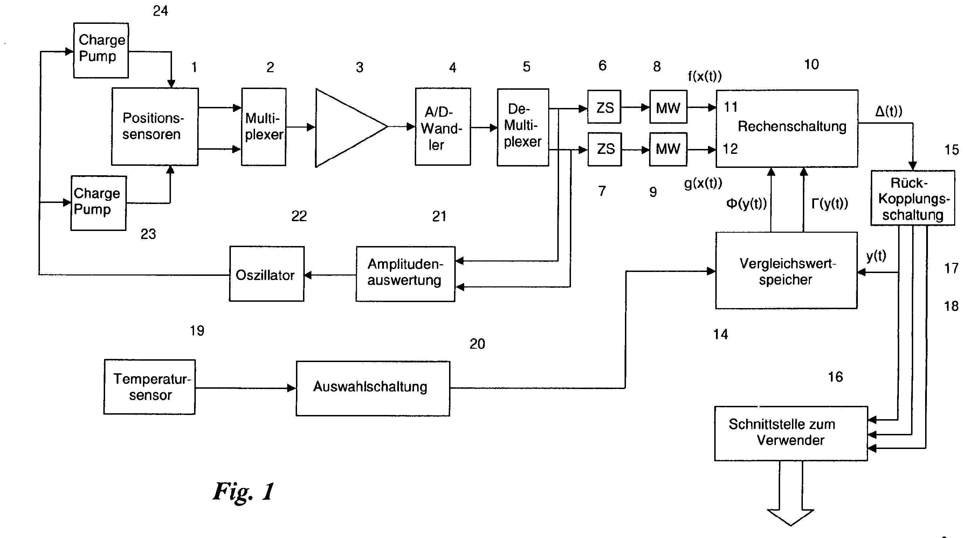

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 1020047038622
- DE 102004062118
- DE 10392675